# EUROPEAN PATENT APPLICATION

(11) **EP 3 742 124 A1**
(43) Date of publication of application: **25.11.2020**
(21) Application number: 20165456.3
(22) Date of filing: 25.03.2020
(51) Int. Cl.: G01C 21/34, G01C 21/00, G01C 21/36

(54) **METHOD, APPARATUS, AND COMPUTER PROGRAM PRODUCT FOR TRAFFIC DEPENDENT ROUTE GUIDANCE**

(30) Priority: 21.05.2019 US 201916418376
(71) Applicant: HERE Global B.V., 5611 ZT Eindhoven (NL)
(72) Inventor: Patriarca, Vittorio, 13357 Berlin (DE); Arbach, Youssef, 10115 Berlin (DE); Zhang, Yu, 12163 Berlin (DE); Tarana, Stefan, 10247 Berlin (DE); Kochkin, Dmitry, 10589 Berlin (DE)
(74) Representative: Potter Clarkson

(57) **Abstract**

A method, apparatus and computer program product are provided for determining route guidance in a manner dependent upon traffic. The method includes determining a route for a vehicle based on a location of the vehicle and a destination of the vehicle. The method also includes causing the transmission of a request for one or more tiles containing traffic information along a route tree. The method further includes receiving one or more tiles that contains traffic information along the route. The method still further includes updating the route for the vehicle based on at least one of the one or more tiles. A corresponding apparatus and computer program product are provided.

## Description

### TECHNOLOGICAL FIELD

Example embodiments of the present disclosure relate generally to a method and associated apparatus and computer program product for generating route guidance, and more particularly, to a method and associated apparatus and computer program product for generating route guidance dependent upon traffic information.

### BACKGROUND

Navigation guidance is often provided to drivers, pedestrians or others, such as in the form of a route to a destination. The navigation guidance may vary, however, based upon the traffic conditions. For example, during off-peak hours, the navigation guidance may suggest a first route from an origin to a destination. However, during rush hour, the navigation guidance may suggest a different route since the traffic congestion along the first route may increase the travel time along the first route to such an extent that the different route, such as a longer route or a route that includes more side streets, becomes more advantageous.

Optimizing navigation guidance with traffic information can be difficult, time consuming, and require substantial quantities of data. Real-time navigation guidance is often provided to a device through a mobile network and the speed, the size, and/or the quality of data transfer can be problematic, especially for areas with poor coverage and devices with finite data allotments. Many current approaches process traffic data on the server side, requiring the transmittal of large data packets to the device for final processing and/or display, resulting in high demand on networks that may adversely affect performance.

### BRIEF SUMMARY

A method, apparatus, and computer program product are provided for route guidance that takes into account traffic information. Incorporating traffic information into route guidance may result in large data usage in order to maintain an accurate level of route guidance. The method, apparatus, and computer program product of the present disclosure allows for a tile based route guidance that manages data usage and accuracy.

In an example embodiment, a method is provided for determining route guidance in a manner dependent upon traffic. The method includes determining a route for a vehicle based on a location of the vehicle and a destination of the vehicle. The method also includes causing transmission of a request for one or more tiles containing traffic information along a route tree. The route tree includes a collection of links considered during determination of the route. The method further includes receiving one or more tiles that contain traffic information along the route tree. The method still further includes updating the route for the vehicle based on at least one of the one or more tiles.

In some embodiments, the method also includes determining whether the traffic information provided by the one or more tiles covers the entire route tree and in an instance in which the traffic information provided by the one or more tiles fails to cover the entire route tree, causing a request for one or more additional tiles containing traffic information to be transmitted. In such an embodiment, the method also includes receiving one or more additional tiles that contain traffic information along the route tree and updating the route based on the one or more additional tiles. In some embodiments, the method also includes receiving an input indicating one or more additional routes to be displayed and updating the route based on one of the one or more additional routes. In some embodiments, the method also includes causing a display of the route.

In some embodiments, the method also includes determining the one or more tiles fails to include traffic information for one or more links of the route tree and requesting one or more additional tiles containing the traffic information for the one or more links of the route tree that fails to include traffic information. In some embodiments, the method also includes receiving one or more additional tiles containing the traffic information of the one or more links of the route tree that fails to include traffic information and updating the route based on at least one of the one or more additional tiles. In some embodiments, the one or more tiles includes at least one of a tile identification number, a date of capture, a time of capture, a road specifications, or traffic information associated with each tile.

In another example embodiment, an apparatus is provided for determining route guidance with traffic. The apparatus includes at least one processor and at least one non-transitory memory including computer program code instructions with the computer program code instructions configured to, when executed, cause the apparatus to determine a route for a vehicle based on a location of the vehicle and a destination of the vehicle. The computer program instructions are further configured to, when executed, cause the apparatus to cause transmission of a request for one or more tiles containing traffic information along a route tree. The route tree includes a collection of links considered during determination of the route. The computer program instructions are still further configured to, when executed, cause the apparatus to receive one or more tiles that contain traffic information along the route tree. The computer program instructions are also configured to, when executed, cause the apparatus to update the route for the vehicle based on at least one of the one or more tiles.

In some embodiments, the computer program instructions are further configured to, when executed, cause the apparatus to determine whether the traffic information provided by the one or more tiles covers the entire route tree and in an instance in which the traffic information provided by the one or more tiles fails to cover the entire route tree, cause a request for one or more additional tiles containing traffic information to be transmitted. In such an embodiment, the computer program instructions are still further configured to, when executed, cause the apparatus to receive one or more additional tiles that contain traffic information along the route tree and update the route based on at least one of the one or more additional tiles.

In some embodiments, the computer program instructions are further configured to, when executed, cause the apparatus to receive an input indicating one or more additional routes to be displayed and update the route based on one of the one or more additional routes. In some embodiments, the computer program instructions are further configured to, when executed, cause the apparatus to cause a display of the route.

In some embodiments, the computer program instructions are further configured to, when executed, cause the apparatus to determine the one or more tiles fails to include traffic information for one or more links of the route tree and request one or more additional tiles containing the traffic information for the one or more links of the route tree that fails to include traffic information. In some embodiments, the computer program instructions are further configured to, when executed, cause the apparatus to receive one or more additional tiles containing traffic information of the one or more links of the route tree that fails to include traffic information and update the route based on at least one of the one or more additional tiles. In some embodiments, the one or more tiles includes at least one of a tile identification number, a date of capture, a time of capture, a road specifications, or traffic information associated with each tile.

In yet another example embodiment, a computer program product is provided that includes at least one non-transitory computer-readable storage medium having computer-executable program code portions stored therein with the computer-executable program code portions comprising program code instructions configured to determine route guidance with traffic. The computer-executable program code portions further include program code instructions configured to determine a route for a vehicle based on a location of the vehicle and a destination of the vehicle. The computer-executable program code portions still further include program code instructions configured to cause transmission of a request for one or more tiles containing traffic information along a route tree. The route tree includes a collection of links considered during the determination of the route. The computer-executable program code portions also include program code instructions configured to receive one or more tiles that contain traffic information along on the route tree. The computer-executable program code portions further include program code instructions configured to update the route for the vehicle based on at least one of the one or more tiles.

In some embodiments, the program code instructions are further configured to determine whether the traffic information provided by the one or more tiles covers the entire route tree and in an instance in which the traffic information provided by the one or more tiles fails to cover the entire route tree, cause a request for one or more additional tiles containing traffic information to be transmitted. In some embodiments, the program code instructions are further configured to receive one or more additional tiles that contain traffic information along the route tree and update the route based on at least one of the one or more additional tiles.

In some embodiments, the program code instructions are further configured to receive an input indicating one or more additional routes to be displayed and update the route based on one of the one or more additional routes. In some embodiments, the program code instructions are further configured to cause a display of the route.

In some embodiments, the program code instructions are further configured to determine whether the one or more tiles fails to include traffic information for one or more links of the route tree and request one or more tiles containing the traffic information for the one or more links of the route tree that fails to include traffic information. In some embodiments, the program code instructions are further configured to receive one or more additional tiles containing the traffic information for one or more links of the route tree that fails to include traffic information and update the route based on at least one of the one or more additional tiles. In some embodiments, the one or more tiles includes at least one of a tile identification number, a date of capture, a time of capture, a road specifications, or traffic information associated with each tile.

In still another example embodiment, an apparatus is provided for determining route guidance in a manner dependent upon traffic. The apparatus includes means for determining a route for a vehicle based on a location of the vehicle and a destination of the vehicle. The apparatus also includes means for causing transmission of a request for one or more tiles containing traffic information along a route tree. The route tree includes a collection of links considered during determination of the route. The apparatus further includes means for receiving one or more tiles that contain traffic information along the route tree. The apparatus still further includes means for updating the route for the vehicle based on at least one of the one or more tiles.

In some embodiments, the apparatus also includes means for determining whether the traffic information provided by the one or more tiles covers the entire route tree and, in an instance in which the traffic information provided by the one or more tiles fails to cover the entire route tree, causing a request for one or more additional tiles containing traffic information to be transmitted. In some embodiments, the apparatus also includes means for receiving one or more additional tiles that contain traffic information along the route tree and updating the route based on the one or more additional tiles.

In some embodiments, the apparatus also includes means for receiving an input indicating one or more additional routes to be displayed and updating the route based on one of the one or more additional routes. In some embodiments, the apparatus also includes means for causing a display of the route.

In some embodiments, the apparatus also includes means for determining the one or more tiles fails to include traffic information for one or more links of the route tree and requesting one or more additional tiles containing the traffic information for the one or more links of the route tree that fails to include traffic information. In some embodiments, the apparatus also includes means for receiving one or more additional tiles containing the traffic information of the one or more links of the route tree that fails to include traffic information and updating the route based on at least one of the one or more additional tiles. In some embodiments, the one or more tiles includes at least one of a tile identification number, a date of capture, a time of capture, a road specifications, or traffic information associated with each tile.
The following numbered paragraphs are also disclosed:
1. A method of determining route guidance in a manner dependent upon traffic, the method comprising:
   determining a route for a vehicle based on a location of the vehicle and a destination of the vehicle;
   causing transmission of a request for one or more tiles containing traffic information along a route tree, wherein the route tree includes a collection of links considered during determination of the route;
   receiving one or more tiles that contain traffic information along the route tree; and
   updating the route for the vehicle based on at least one of the one or more tiles.
2. The method of paragraph 1 further comprising:
   determining whether the traffic information provided by the one or more tiles covers the entire route tree;
   in an instance in which the traffic information provided by the one or more tiles fails to cover the entire route tree, causing a request for one or more additional tiles containing traffic information to be transmitted;
   receiving one or more additional tiles that contain traffic information along the route tree; and
   updating the route based on the one or more additional tiles.
3. The method of paragraph 1 further comprising:
   receiving an input indicating one or more additional routes to be displayed; and
   updating the route based on one of the one or more additional routes.
4. The method of paragraph 1 further comprising causing a display of the route.
5. The method of paragraph 1 further comprising:
   determining the one or more tiles fails to include traffic information for one or more links of the route tree; and
   requesting one or more additional tiles containing the traffic information for the one or more links of the route tree that fails to include traffic information.
6. The method of paragraph 5 further comprising:
   receiving one or more additional tiles containing the traffic information of the one or more links of the route tree that fails to include traffic information; and
   updating the route based on at least one of the one or more additional tiles.
7. The method of paragraph 1, wherein the one or more tiles includes at least one of a tile identification number, a date of capture, a time of capture, a road specifications, or traffic information associated with each tile.
8. An apparatus for determining route guidance with traffic, the apparatus comprising at least one processor and at least one non-transitory memory including computer program code instructions, the computer program code instructions configured to, when executed, cause the apparatus to:
   determine a route for a vehicle based on a location of the vehicle and a destination of the vehicle;
   cause transmission of a request for one or more tiles containing traffic information along a route tree, wherein the route tree includes a collection of links considered during determination of the route;
   receive one or more tiles that contain traffic information along the route tree; and
   update the route for the vehicle based on at least one of the one or more tiles.
9. The apparatus according to paragraph 8, wherein the at least one memory and computer program code are configured to, with the processor, cause the apparatus to:
   determine whether the traffic information provided by the one or more tiles covers the entire route tree;
   in an instance in which the traffic information provided by the one or more tiles fails to cover the entire route tree, cause a request for one or more additional tiles containing traffic information to be transmitted;
   receive one or more additional tiles that contain traffic information along the route tree; and
   update the route based on at least one of the one or more additional tiles.
10. The apparatus according to paragraph 8, wherein the at least one memory and computer program code are configured to, with the processor, cause the apparatus to:
   receive an input indicating one or more additional routes to be displayed; and
   update the route based on one of the one or more additional routes.
11. The apparatus according to paragraph 8, wherein the at least one memory and computer program code are configured to, with the processor, cause the apparatus to cause a display of the route.
12. The apparatus according to paragraph 8, wherein the at least one memory and computer program code are configured to, with the processor, cause the apparatus to:
   determine the one or more tiles fails to include traffic information for one or more links of the route tree; and
   request one or more additional tiles containing the traffic information for the one or more links of the route tree that fails to include traffic information.
13. The apparatus according to paragraph 12, wherein the at least one memory and computer program code are configured to, with the processor, cause the apparatus to:
   receive one or more additional tiles containing traffic information of the one or more links of the route tree that fails to include traffic information; and
   update the route based on at least one of the one or more additional tiles.
14. The apparatus according to paragraph 8, wherein the one or more tiles includes at least one of a tile identification number, a date of capture, a time of capture, a road specifications, or traffic information associated with each tile.
15. A computer program product for determining route guidance with traffic, the computer program product comprising at least one non-transitory computer-readable storage medium having computer-executable program code portions stored therein, the computer-executable program code portions comprising program code instructions configured to:
   determine a route for a vehicle based on a location of the vehicle and a destination of the vehicle;
   cause transmission of a request for one or more tiles containing traffic information along a route tree, wherein the route tree includes a collection of links considered during the determination of the route;
   receive one or more tiles that contain traffic information along on the route tree; and
   update the route for the vehicle based on at least one of the one or more tiles.
16. The apparatus according to paragraph 15 further comprising program code instructions to:
   determine whether the traffic information provided by the one or more tiles covers the entire route tree;
   in an instance in which the traffic information provided by the one or more tiles fails to cover the entire route tree, cause a request for one or more additional tiles containing traffic information to be transmitted;
   receive one or more additional tiles that contain traffic information along the route tree; and
   update the route based on at least one of the one or more additional tiles.
17. The apparatus according to paragraph 15 further comprising program code instructions to:
   receive an input indicating one or more additional routes to be displayed; and
   update the route based on one of the one or more additional routes.
18. The apparatus according to paragraph 15 further comprising program code instructions to cause a display of the route.
19. The apparatus according to paragraph 15 further comprising program code instructions to:
   determine whether the one or more tiles fails to include traffic information for one or more links of the route tree;
   request one or more tiles containing the traffic information for the one or more links of the route tree that fails to include traffic information;
   receive one or more additional tiles containing the traffic information for one or more links of the route tree that fails to include traffic information; and
   update the route based on at least one of the one or more additional tiles.
20. The apparatus according to paragraph 15, wherein the one or more tiles includes at least one of a tile identification number, a date of capture, a time of capture, a road specifications, or traffic information associated with each tile.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings which are not necessarily drawn to scale, and wherein:
Figure 1 is a block diagram of an apparatus according to an example embodiment of the present disclosure;
Figure 2 is a flowchart of operations for creating route guidance that is dependent upon traffic information derived from geographic-based tiles according to an example embodiment of the present disclosure;
Figure 3 is a block diagram of a system for determining route guidance that is dependent upon traffic information derived from geographic-based tiles according to an example embodiment of the present disclosure; and
Figure 4 is a map illustrating a route and surrounding links of a roadway in accordance with an example embodiment of the present disclosure.

### DETAILED DESCRIPTION

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Thus, use of any such terms should not be taken to limit the spirit and scope of embodiments of the present disclosure.

A method, apparatus and computer program product are provided in accordance with an example embodiment of the present disclosure for generating navigation guidance that takes into account and, in some embodiments, is optimized for traffic conditions. Current techniques involving traffic integration into route guidance generally require server-side processing of data that may consume substantial computing resources of the servers. The method, apparatus and computer program product of an example embodiment are configured to reduce the demand on server side processing by dividing traffic data into distinct tiles based on location and allow at least a portion of the processing to be completed by the apparatus, thereby reducing the size of data packets being transferred to the apparatus. The apparatus may be configured to process the information provided in a tile to correspond with traffic information in a given area and determine a route from a beginning point to a destination point that takes into account, such as by being optimized for, the traffic information. Some embodiments described herein may optionally be used for map generation, map updating, and map accuracy confirmation

As a preliminary matter, the term "map" relates to a relational database representation of a street network and/or its binary implementation on a computer machine. Additionally, the term "link" relates to the representation of the portion of a road between two intersections on a specific map. The term "route" relates to a drivable sequence of connected links, *i.e.,* links which share the same intersection, and the data needed for displaying and driving on the route. The term "tile" relates to any kind of geographical area which is not bound to a specific map binary implementation and may be identifiable, such as by a tile identification number.

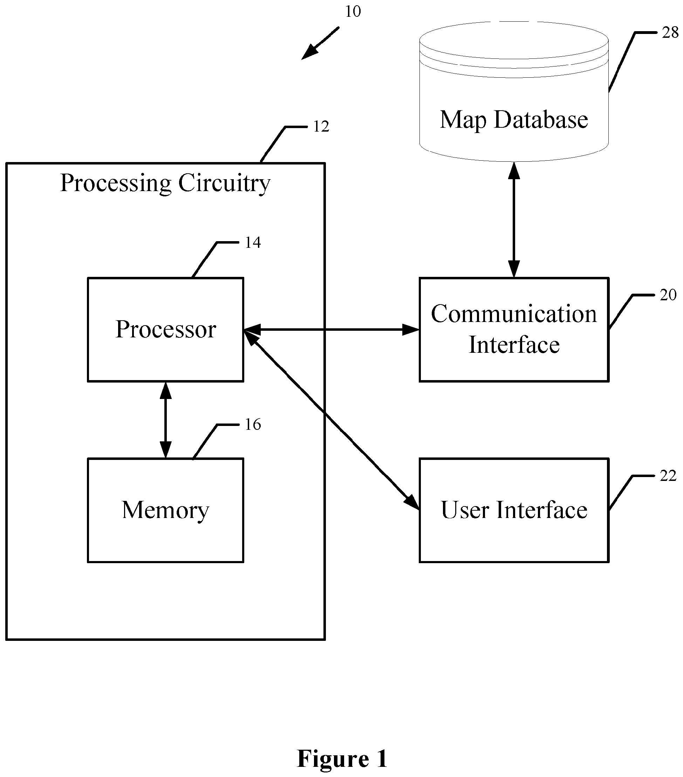

Figure 1 is a schematic diagram of an example apparatus configured for performing any of the operations described herein. Apparatus 10 is an example embodiment that may be embodied by or associated with any of a variety of computing devices that include or are otherwise associated with a device configured for providing route guidance. For example, the computing device that embodies the apparatus may be an infotainment system, a built-in vehicular navigation device, an assisted driving device, or the like. In other embodiments, the apparatus may be embodied or partially embodied as a mobile terminal, such as a personal digital assistant (PDA), mobile telephone, smart phone, personal navigation device, smart watch, tablet computer, camera or any combination of the aforementioned and other types of voice and text communications systems. In an embodiment where some level of vehicle autonomy is involved (*e.g.,* autonomous vehicles), the apparatus 10 may be embodied or partially embodied by an electronic control unit of a vehicle that supports safety-critical systems such as the powertrain (engine, transmission, electric drive motors, etc.), steering (*e.g.*, steering assist or steer-by-wire), and/or braking (*e.g.*, brake assist or brake-by-wire). Optionally, the computing device may be an Advanced Driver Assistance System module (ADAS) which may at least partially control autonomous or semi-autonomous features of a vehicle.

In an example embodiment, the apparatus may be embodied by or associated with a plurality of computing devices that are in communication with or otherwise networked with one another such that the various functions performed by the apparatus may be divided between the plurality of computing devices that operate in collaboration with one another.

The apparatus 10 may be equipped, associated or in communication with any number of sensors (not shown), such as a global positioning system (GPS) sensors, accelerometers, Light Detection and Ranging (LiDAR) sensors, radar, and/or gyroscope sensors. Any of the sensors may be used to sense information regarding the movement, positioning, or orientation of the computing device that embodiments the apparatus for use in navigation assistance, as described herein according to example embodiments. In some example embodiments, such sensors may be implemented in a vehicle or other remote apparatus, and the information detected may be transmitted to the apparatus 10, such as by near field communication (NFC), Bluetooth™ communication, or the like.

The apparatus 10 may include, be associated with, or may otherwise be in communication with a processing circuitry 12, such as a processor 14 and a memory device 16; a communication interface 20; a user interface 22; and a map database 28.In some embodiments, the processor 14 (and/or co-processors or any other processing circuitry assisting or otherwise associated with the processor) may be in communication with the memory device 16 via a bus for passing information among components of the apparatus. The memory device may be non-transitory and may include, for example, one or more volatile and/or non-volatile memories. In other words, for example, the memory device 16 may be an electronic storage device (for example, a computer readable storage medium) comprising gates configured to store data (for example, bits) that may be retrievable by a machine (for example, a computing device such as the processor). The memory device 16 may be configured to store information, data, content, applications, instructions, or the like for enabling the apparatus to carry out various functions in accordance with an example embodiment of the present disclosure. For example, the memory device 16 could be configured to buffer input data for processing by the processor 14. Additionally or alternatively, the memory device 16 could be configured to store instructions for execution by the processor 14.

The processor 14 may be embodied in a number of different ways. For example, the processor 14 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 14 may include one or more processing cores configured to perform independently. A multi-core processor may enable multiprocessing within a single physical package. Additionally or alternatively, the processor 14 may include one or more processors configured in tandem via the bus to enable independent execution of instructions, pipelining and/or multithreading.

In an example embodiment, the processor 14 may be configured to execute instructions stored in the memory device 16 or otherwise accessible to the processor. Alternatively or additionally, the processor 14 may be configured to execute hard coded functionality. As such, whether configured by hardware or software methods, or by a combination thereof, the processor 14 may represent an entity (for example, physically embodied in circuitry) capable of performing operations according to an embodiment of the present disclosure while configured accordingly. Thus, for example, when the processor 14 is embodied as an ASIC, FPGA or the like, the processor 14 may be specifically configured hardware for conducting the operations described herein. Alternatively, as another example, when the processor 14 is embodied as an executor of software instructions, the instructions may specifically configure the processor 14 to perform the algorithms and/or operations described herein when the instructions are executed. However, in some cases, the processor 14 may be a processor of a specific device (for example, the computing device) configured to employ an embodiment of the present disclosure by further configuration of the processor by instructions for performing the algorithms and/or operations described herein. The processor 14 may include, among other things, a clock, an arithmetic logic unit (ALU) and logic gates configured to support operation of the processor.

The apparatus 10 of an example embodiment may also include or otherwise be in communication with a user interface 22. The user interface 22 may include a touch screen display, a speaker, physical buttons, and/or other input/output mechanisms. In an example embodiment, the processor 14 may comprise user interface circuitry configured to control at least some functions of one or more input/output mechanisms. The processor 14 and/or user interface circuitry comprising the processor 14 may be configured to control one or more functions of one or more input/output mechanisms through computer program instructions (for example, software and/or firmware) stored on a memory accessible to the processor (for example, memory device 16, and/or the like). In this regard, the apparatus 10 may interpret positioning data collected by its sensors and provide a destination preview including visual and audio feedback, to a user, for example.

The apparatus 10 of an example embodiment may also optionally include a communication interface 20 that may be any means such as a device or circuitry embodied in either hardware or a combination of hardware and software that is configured to receive and/or transmit data from/to other electronic devices in communication with the apparatus, such as by NFC, described above. Additionally or alternatively, the communication interface 20 may be configured to communicate over wireless communication protocols including Global System for Mobile Communications (GSM), such as but not limited to Long Term Evolution (LTE). In this regard, the communication interface 20 may include, for example, an antenna (or multiple antennas) and supporting hardware and/or software for enabling communications with a wireless communication network. Additionally or alternatively, the communication interface 20 may include the circuitry for interacting with the antenna(s) to cause transmission of signals via the antenna(s) or to handle receipt of signals received via the antenna(s). In some environments, the communication interface 20 may alternatively or also support wired communication and/or may alternatively support vehicle to infrastructure wireless links.

The apparatus may be equipped or associated with a map database 28. In some embodiments, some or all of the map database 28 may be stored in the memory device 16. Additionally or alternatively, some or all of the map database 28 may be remote from the processing circuitry 12 and may be received by the processing circuitry 12, such as through the communication interface 20. The map database 28 may include information relating to road mapping, traffic information (real-time and/or historical), and/or the like. The road mapping may include information relating to link(s) of road, including road type, speed limits, vehicle limitations, and/or the like. In some embodiments, the traffic information may be combined into one or more tiles. The tiles may be identified by a tile identifier (TileID) and may also be categorized based on the location of the traffic information and the time range for which the traffic information of a given tile is valid . The tile may include information relating to a predefined geographic region, such as a geographic region of a predefined size and shape, *e.g.,* a square, with the information including information, such as traffic information, relating to links of the roadways that extend through the geographic region to which the tiles relates.

The map database 28 may be a master map database, such as a high definition (HD) map database, stored in a format that facilitates updates, maintenance, and development. The data in the production and/or delivery formats can be compiled or further compiled to form geographic database products or databases, which can be used in end user navigation devices or systems.

The apparatus 10 may support a mapping or navigation application so as to present maps or otherwise provide navigation or driver assistance, such as in an example embodiment in which map data is created or updated using methods described herein. For example, the apparatus 10 may provide for display of a map and/or instructions that define a route within a network of roads via user interface 22. In order to support a mapping application, the computing device may include or otherwise be in communication with a map database 28. The map database may be stored in memory 16. For example, the map database may include node data records, road segment or link data records, point of interest (POI) data records, and other data records. More, fewer, or different data records can be provided. In one embodiment, the other data records include cartographic data records, routing data, and maneuver data. One or more portions, components, areas, layers, features, text, and/or symbols of the POI or event data can be stored in, linked to, and/or associated with one or more of these data records. For example, one or more portions of the POI, event data, or recorded route information can be matched with respective map or geographic records via position or GPS data associations (such as using known or future map matching or geo-coding techniques), for example. Furthermore, other positioning technology may be used, such as electronic horizon sensors, radar, LiDAR, ultrasonic and/or infrared sensors.

In example embodiments, the user interface 22 may be provided as a navigation system to provide driver assistance to a user traveling along a network of roadways whose geometry and details may be generated and/or updated according to methods described herein. The navigation system may allow the user to input the vehicle type or the apparatus may be configured to determine the vehicle type, such as a generic type of vehicle or a specialized type of vehicle. In some embodiments, a navigation system may be configured to be dedicated to one or more types of vehicle exclusively. In an example embodiment, a navigation system is in communication with the network and/or map database in order to be updated based on the vehicle type desired.

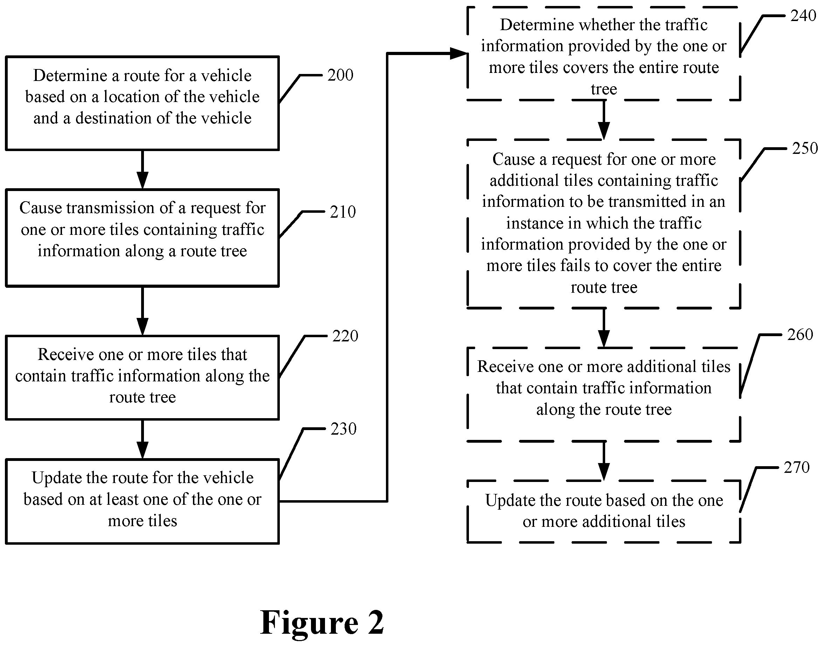

Referring now to Figure 2, the operations performed by the apparatus 10 of an example embodiment are depicted. As shown in Block 200 of Figure 2, the apparatus 10 of an example embodiment includes means, such as the processing circuitry 12, processor 14, or the like, for determining a route for a vehicle based on a location of the vehicle and a destination of the vehicle. In some embodiments, the route may include mapping of the street links to be travelled, the estimated arrival time, the distance, and/or the like. In some embodiments, the apparatus 10 includes means, such as the user interface 22 for displaying the route (*e.g.,* the map, turn-by-turn directions, arrival time, distance, etc.).

In some embodiments, the apparatus 10, such as the processing circuitry 12, *e.g.,* the processor 14, may utilize traffic information relating to one or more road links for the determination of the route. In some embodiments, the apparatus 10 may create an initial route independent of traffic information for some or all of the road links along the route. In some embodiments, the apparatus 10, such as the processing circuitry 12, may determine the route with no traffic information (*e.g.*, based on the shortest distance from the location of the vehicle to the destination). Alternatively, the apparatus 10 may have traffic information for an area around the vehicle (*e.g.,* one or more tiles containing traffic information for all links within 1 kilometer of the vehicle may be received by the apparatus before the initial route determination takes place) and the apparatus, such as the processing circuitry, may use the traffic information, at least in part, to determine the route (*e.g.,* the apparatus may determine a route with links with traffic information either in addition to, or instead of, links with no traffic information).

In some embodiments, the apparatus 10, such as the processing circuitry 12 or the like, may request traffic information for one or more links, explicitly or implicitly, by providing location information for the vehicle in conjunction with a request for traffic information. For example, an apparatus 10 may provide the location of the apparatus to the map database 28 in conjunction with a request for traffic information and in return the map database 28 may provide traffic information for the surrounding area. In some embodiments, the traffic information may be separated into tiles, according to location and/or time restrictions. For example, all traffic information for a downtown during rush hour may be separated into a given tile. In some embodiments, the apparatus 10, such as the processor 14, may use a bidirectional graph search algorithm to determine the route and/or route tree. In some embodiments, the bidirectional graph search algorithm may be hierarchical.

As shown in Block 210 of Figure 2, the apparatus of an example embodiment includes means, such as the processing circuitry 12, processor 14, communication interface 20 or the like, for causing the transmission of a request for one or more tiles containing traffic information along a route tree. In some embodiments, a route tree may be any link(s) of roadway considered by the apparatus 10 during the determination of the route (*e.g.,* Block 200) and may include link(s) of roadway that are both included and not included in the current route. In some embodiments, the apparatus 10, such as by the processing circuitry 12, *e.g.,* the processor 14, may determine the one or more tiles to request that includes the link(s) along a route tree. For example, the apparatus 10 may be able to determine one or more tiles to request based on the coordinates of the one or more link(s). In some embodiments, the apparatus 10, such as the processing circuitry 12, may transmit location information, destination information, route information (*e.g.*, time ranges or functional road classes along route), and/or the like to request one or more tiles containing traffic information for related links of roadway. In some embodiments, the apparatus 10 may determine, such as by the processing circuitry 12, whether one or more links of the route tree is missing traffic information (*i.e.*, the apparatus 10 does not have a tile that contains traffic information for the one or more links along the route tree). In some embodiments, the apparatus 10, such as the processing circuitry 12, may determine that one or more links of the route tree do not have related traffic information (*e.g.,* the tile may only be valid for a given time range and therefore any traffic information derived from the tile may not be valid for the link at a time outside of the time range). For example, the destination may be outside of the area for which the apparatus 10 initially has received one or more tiles containing traffic information. In some embodiments, the apparatus 10, such as the processing circuitry 12, may cause the transmission of the location information (*e.g.,* location of the apparatus being carried by a vehicle and/or destination location). In some embodiments, the request for one or more tiles containing traffic information may include one or more links on the route that the apparatus determined, such as by the processing circuitry 12, *e.g.,* the processor 14, did not have a related tile containing traffic information. Additionally, the request for traffic information may include time information relating to the traffic information desired. For example, the request may include a time stamp used by a server to determine the one or more tiles to provide to the apparatus 10. In some embodiments, the apparatus 10, such as the processing circuitry 12, may request one or more additional tiles containing traffic information for missing link(s) of the route and/or link(s) near to the route (*e.g.,* along the route tree), in order to, for example, determine alternative routes.

As shown in Block 220 of Figure 2, the apparatus 10 of an example embodiment includes means, such as the processing circuitry 12, processor 14, the communication interface 20 or the like, for receiving one or more tiles that contain traffic information along the route tree. In some embodiments, the apparatus 10, such as by the processing circuitry 12, *e.g.,* the processor 14, may receive the one or more tiles from the map database 28. In some embodiments, the reception of the one or more tiles may be in response to the request by the apparatus 10 discussed in reference to Block 210 of Figure 2. For example, the apparatus 10, such as the processing circuitry 12, may transmit TileID(s), location information, destination information, route information, and/or the like in conjunction with the request for one or more tiles. In some embodiments, the apparatus 10, such as the processing circuitry 12, may receive tiles containing traffic information associated with each link of the route and/or route tree for which the apparatus 10 does not have any tiles that contain traffic information.

In some embodiments, the tiles may be map version independent (*e.g.*, the tiles may be relevant to and used by different map versions). In some embodiments, the TileID may be changed based on a map update (*e.g.*, splitting and/or merging of tiles).For example, the tiles may contain information for a plurality of links of the roadway in an area. In various embodiments, the apparatus 10, such as the processing circuitry 12, may receive tile IDs of tiles within which one or more links of the route are contained. For example, the apparatus 10, such as the processing circuitry 12, may request the traffic information for a link of road along the route for which the apparatus does not have traffic information and in response, the apparatus 10 may receive a tile and/or tile ID that includes the link of road requested. As a tile is associated with a respective geographic region, such as a square region that is, for example, a predetermined number of miles, on a side, tiles generally include traffic information for nearby links of the roadway, thereby, allowing for alternative routes to be determined. In some embodiments, the one or more tiles may include characteristic information. For example, the tiles may include characteristic information, such as tile ID, valid time range, maximum functional road class, maximum incident effect code, and/or minimum incident effect code of one or more of the tiles. In some embodiments, the entering time and exiting time associated with the a potential route, are used to specify the estimated time range during which the links within the tile might be traversed. In an example embodiment, the estimated time range during which the links within the tile might be traversed may be derived by the processing circuitry 12 from the estimated time of arrival (ETA) of the route. In some embodiments, the time range may be used to support predictive traffic determination.

In some embodiments, the apparatus 10, such as by the processing circuitry 12, *e.g.,* the processor 14, the communication interface 20 or the like, may request one or more tiles containing traffic information for one or more links not located on the route. In some embodiments, the apparatus 10, such as the processing circuitry 12, may request one or more tiles containing traffic information for a link of roadway that was not considered during a previous determination of the route (*e.g.*, outside the initial route tree). In some embodiments, the apparatus 10, such as the processing circuitry 12, may request one or more tiles containing information for a link of roadway in proximity to a link on the route tree to facilitate the consideration of alternative routes based upon the traffic information. For example, the apparatus 10, such as the processing circuitry 12, may request one or more tiles containing traffic information for both diverging links of roadway at a fork in the road where the route includes taking only one link of roadway associated with the fork. In some embodiments, the request for one or more tiles may be proximity based. For example, one or more tiles may be requested for a threshold distance (*e.g.,* 50 kilometers at a time) until the current location to the destination is covered.

In some embodiments, the size of the tile may be configured, *e.g.*, optimized, based on the desired performance of at least one of the traffic request response size (*e.g.,* based on the desired amount of data to transfer), the traffic request response time (*e.g.,* how quickly the entire tile needs to be received by the apparatus from the server), and/or the number of iterations required to tailor the route for the traffic information. For example, the tile may be sized to contain traffic information for a smaller network of roads when the paramount factor in relation to the development of route guidance is the traffic request response time. In some embodiments, the tiles may be 5 kilometers by 5 kilometers. In some embodiments, the route tree may evaluate the value of roads with higher graded functional class designations for longer distances (*e.g.*, for highways, freeways, etc.) more preferably as the cost of traversal is lower for the distance. In turn, considering higher graded functional class roads drives tile selection at a coarser detail level, as these coarser detail level (or lower zoom level) tiles contain less lower functional class roads (therefore no info on those) and larger chunks of the higher graded functional class roads (*e.g.,* the function class of the road and/or length of the route may affect the tile size requested). The higher graded functional class discussed herein relates to the traffic speed and/or volume of traffic on the road, such that the higher the speed and/or traffic on the road, the higher the function class is for that road. For example, a Class 1 highway may be higher graded than a Class 4 neighborhood road.

In some embodiments, the apparatus 10, such as the processing circuitry 12, *e.g.,* the processor 14, may determine traffic information for a subset of one or more links of roadways included in a tile. For example, the apparatus 10, such as the processing circuitry 12, may determine the traffic information within a predefined region of a tile about the current location of the vehicle, such as within a circle having a one kilometer radius from the vehicle associated with the apparatus' location regardless that the tile contains traffic information for a larger region, such as a 5 kilometers by 5 kilometers area. In such an embodiment, the tiles may be stored by the apparatus 10, such as in the memory device 16, for use in later operations as needed. In some embodiments, the apparatus 10, such as the processing circuitry 12, may merge one or more tiles together with surrounding tiles. For example, a tile that is 5 kilometers by 5 kilometers may be merged with an adjacent tile that is 5 kilometers by 5 kilometers to form a new tile that is 10 kilometers by 5 kilometers. In some embodiments, the merging of two or more tiles may also include coordinating the valid time ranges of each individual tile, such as by insuring that the tiles include traffic information for the same time period. For example, the combined tile may cover the area of the original tiles for the same time period (*e.g.,* rush hour). Additionally, in some embodiments, the request for one or more tiles may be affected by the size of the route tree. For example, instead of requesting 4 tiles at zoom level n, the apparatus may request 1 tile at zoom level n-1, provided that the zoomed tile contains traffic information for the functional class roads being considered.

In some embodiments, the apparatus 10, such as the processing circuitry 12, may sort and/or merge tiles, such as tiles for the same geographic region, such that the resulting tile has an extended time range for the same geographic region (*e.g.,* two tiles of the same general area for two different times may be combined to create one tile for the given area during both time periods). In some embodiments, the apparatus 10 includes means, such as the processing circuitry 12, the processor 14, or the like, for fine-tuning of the determined tiles and the like. In some embodiments, filters may be used to limit the links on which traffic information is needed based on functional road class, and the types of traffic incidents needed by the calculation.

As shown in Block 230 of Figure 2, the apparatus 10 of an example embodiment includes means, such as the processing circuitry 12, processor 14, or the like, for updating the route for the vehicle, pedestrian or the like based on at least one of the one or more tiles. In this regard, although a route may be developed and updated for a vehicle, a pedestrian or the like, the method, apparatus 10 and computer program product of an example embodiment will be described in conjunction with the route of a vehicle by way of example, but not of limitation. In some embodiments, the apparatus 10 includes means, such as the processing circuitry 12, *e.g.,* the processor 14 or the like, for updating route information, such as the ETA. For example, the route may remain the same path along multiple links of roadway and information relating to time to destination may change based on the level of traffic present on the links during the travel time. In some embodiments, the apparatus 10 includes means, such as the processing circuitry 12, the processor 14, or the like, for updating the routes based on one or more additional tiles containing traffic information associated with one or more links of roadway included in the route tree. In some embodiments, all of the links in the route may be changed. For example, the traffic along one roadway may make the road impassable and the route is changed to an alternative route. In some embodiments, the apparatus 10 may transmit information relating to one or more links along a route based on the traversal of the given one or more links, such that the one or more tiles may be updated for further use.

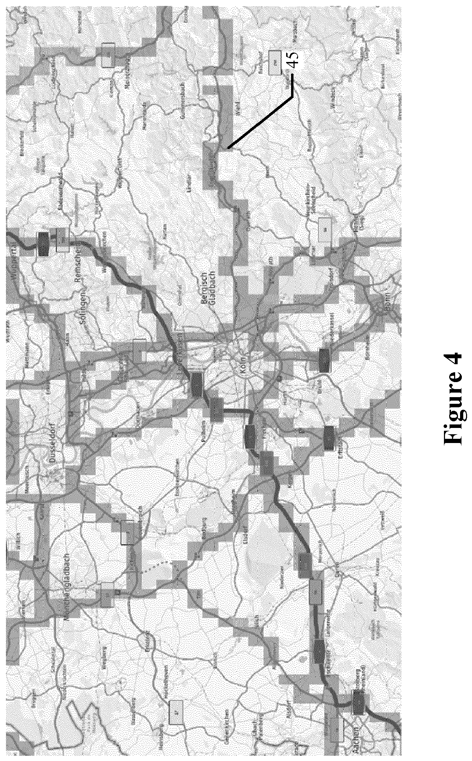

As shown in Figure 4, the apparatus 10, such as the processing circuitry 12, may receive one or more tiles containing traffic information for a network of links near the route (*e.g.,* along the route tree). For example, the traffic information for the non-route links may be obtained in one or more tiles containing route links, thereby permitting analysis of alternative routes. Additionally, the one or more tiles may include traffic information for one or more links along the route tree, but not specifically on the route. In some embodiments, the network of links near the route may be determined based on the one or more links in the route tree (*i.e.,* link(s) considered by the apparatus 10 during the determination of the route). The traffic information for non-route links may be stored by the apparatus 10 and, more particularly, by the memory device 16, either temporarily or permanently, for use during subsequent operations. For example, one or more tiles containing traffic information obtained when determining the initial route update may be used during the determination of an alternative route. In some embodiments, traffic information derived from one or more tiles relating to one or more links (*e.g.,* link 45) may be combined by the processing circuitry 12 with mapping information as shown to approximate a road network.

As shown in optional Block 240 of Figure 2, the apparatus 10 of an example embodiment includes means, such as the processing circuitry 12, processor 14, or the like, for determining whether the traffic information provided by the one or more tiles covers the entire route tree. In some embodiments, the apparatus 10, such as the processing circuitry 12, may not have tile containing traffic information for every link of the route. For example, the updated route may include links for which the apparatus 10 does not have a tile containing such traffic information. In some embodiments, the apparatus 10, such as the processing circuitry 12, *e.g.,* the processor 14, may determine that the valid time period for the tile containing traffic information of a link of the route no longer applies. In such an embodiment, the apparatus 10 may be configured to treat the link as a link with no traffic information. Alternatively, the apparatus 10 may be configured to use the tile containing traffic information for the link for the different time period until further traffic information is received. In some embodiments, the apparatus 10 may determine whether the traffic information provided by the one or more tiles covers a specific portion of the route tree (*e.g.,* the route only) instead of the entire route tree.

As shown in optional Block 250 of Figure 2, the apparatus 10 of an example embodiment includes means, such as the processing circuitry 12, processor 14, the communication interface 20 or the like, for transmitting a request for one or more additional tiles containing traffic information in an instance in which the traffic information provided by the one or more tiles fails to cover the entire route tree. In some embodiments, the request for one or more additional tiles containing traffic information by the apparatus 10 may be the same process as used to request one or more tiles containing traffic information in Block 210. For example, the request may include one or more TileIDs based on the location and/or desired time range of the link.. In some embodiments, the apparatus 10, such as the processing circuitry 12, *e.g.,* the processor 14, may request one or more additional tiles containing traffic information for different links of roadway along a route tree. For example, in an instance that the route is updated, such as by the operations of Block 230, one or more links not previously along the prior route may become a part of the updated route. In some embodiments, the apparatus 10, such as by the processing circuitry 12, *e.g.,* the processor 14, may request one or more additional tiles containing traffic information for a link of a roadway that the apparatus 10 has previously received traffic information (*e.g.*, an update of traffic information). For example, the vehicle's user may stop to eat or refuel and the apparatus 10, such as the processing circuitry 12, may be configured to request one or more additional tiles containing updated traffic information for the route based on the amount of time that the vehicle was stopped (*e.g.*, time may affect the traffic conditions at a given time such that the one or more tiles containing traffic information that the apparatus had prior to the stop may now be outdated).

In some embodiments, the apparatus 10 includes means, such as the processing circuitry 12, the processor 14, or the like, for determining multiple routes from one location to a destination point. For example, the apparatus 10, such as the processing circuitry 12, may be configured to determine a route that is the shortest distance, a route that provides the shortest travel time, a route that avoids traffic, and/or the like. In some embodiments, the multiple routes may all be part of the route tree. In some embodiments, the apparatus 10 includes means, such as the processing circuitry 12, the processor 14, or the like, for merging the one or more tiles containing traffic information for a route with one or more tiles traffic information for a previous route. In some embodiments, the merged routes may result in tiles that are defined to have entering and exit times that are based on the entering times and exit times for the tiles associated with the different routes, by either taking the earliest entering time and the latest exiting time from among the merged routes or only combining routes with similar entering times and exiting times, such as entering times that deviate by no more than a predefined amount and exiting times that deviate by no more than a predefined amount. In some embodiments, this process may be similar to the combination of tiles discussed above. In various embodiments, the apparatus 10, such as the processing circuitry 12, *e.g.,* the processor 14, may perform multiple iterations of the operations described herein relating to route determination and the tile request. In some embodiments, the apparatus 10, such as the processing circuitry 12, *e.g.,* the processor 14, may compare a route with a previous route and/or an alternative route to identify the differences (*e.g.,* time and/or distance) therebetween. In various embodiments, the number of iterations may depend on the range of a given route (the number of iterations varying directly with the range, *e.g.,* the longer the route, the more likely traffic information will drastically change the route) and/or desired accuracy level (the number of iterations varying directly with the desired accuracy, *e.g.*, more iterations may be more accurate). For example, an apparatus 10, such as the processing circuitry 12, may cause the transmission of multiple tile requests approximately twice as often for a route that is from 500 kilometers to 1000 kilometers than a route from 100 kilometers to 500 kilometers.

As shown in optional Block 260 of Figure 2, the apparatus 10 of an example embodiment includes means, such as the processing circuitry 12, processor 14, communication interface 20 or the like, for receiving one or more additional tiles that contain traffic information along the route tree. In various embodiments, the receipt of one or more additional tiles may be substantially similar to the reception of the one or more tiles discussed in Block 220 of Figure 2 above.

As shown in optional Block 270 of Figure 2, the apparatus 10 of an example embodiment includes means, such as the processing circuitry 12, processor 14, or the like, for updating the route based on the one or more additional tiles. In various embodiments, the update of the route may be substantially similar to the update to the route discussed in reference to Block 230 of Figure 2.

In some embodiments, the apparatus 10 includes means, such as the processing circuitry 12, the processor 14, the user interface 22 or the like, for causing the route to the vehicle to be displayed. In some embodiments, the route may be initially displayed to the user interface 22 as soon as the route is determined (*e.g.,* after the operations discussed in relation to Block 200), regardless of any modification, *e.g.*, optimization, for traffic information. For example, the apparatus 10, , such as the processing circuitry 12, *e.g.,* the processor 14, may cause the route to be displayed by the user interface while the operations described herein are taking place (*e.g.,* during the request for traffic information and subsequent changes to the route). In some embodiments, the route displayed by the user interface 22 may be dynamic (*e.g.,* update on the user interface at approximately the same time the processor 14 updates the route). In some embodiments, the apparatus 10, such as the processing circuitry 12, may be configured to provide updates to the user interface 22 at specific points in route guidance. For example, during the initial route determination, the apparatus 10, such as the processing circuitry 12, may provide updates to the user interface 22 when route determination begins, when a route is initially determined, when tile requests have been requested, and/or when tiles containing traffic information has been incorporated into the route determination. In some embodiments, the apparatus 10, such as the processing circuitry 12, may only update the route displayed on the user interface at a given interval of the operations. For example, a route that has not been modified, e.g., optimized, for traffic may be initially displayed to the user interface 22 and the route displayed on the user interface 22 may not be updated until the route has been modified, e.g., optimized, for traffic to a predetermined level, such as by being fully optimized or close to fully optimized (*e.g.,* intermediate updates may be kept internal by the apparatus 10 without display by the user interface).

In some embodiments, only one or more characteristics of the route may be shown, such as the ETA, road links, distance to destination, and/or the like. In some embodiments, the apparatus 10, such as the processing circuitry 12 and/or the user interface 22, may receive user input relating to the route. For example, the user input may indicate mapping settings, a desire for alternative routes, a change in destination, and/or the like.

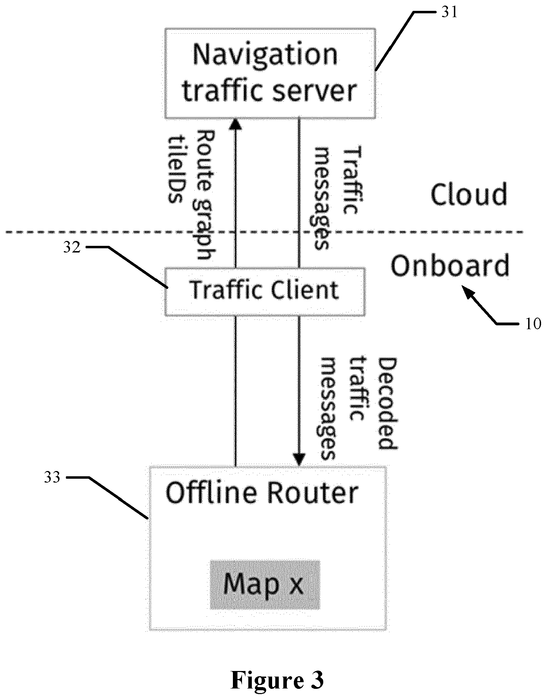

Referring now to Figure 3, an example embodiment of a system in accordance with the present disclosure is provided. In such an embodiment, the apparatus 10, such as a computing device that embodies the apparatus, may be carried by a vehicle or in a vehicle, and be in communication with a navigation traffic server 31. The system of Figure 3 also includes a traffic client 32 and an offline router 33 which, in some embodiments, may be embodied by the processing circuitry 12, *e.g.,* the processor 14, of Figure 1. In an example embodiment, the request for one or more tiles containing traffic information discussed above in conjunction with Figure 2 may be transmitted by the apparatus 10 to the navigation traffic server 31, which processes and returns tiles including the request links. The apparatus 10, such as the traffic client 32, may determine the traffic information for a specific link based on the tile. In some embodiments, the apparatus 10, such as the offline router 33, *e.g.,* the processing circuitry 12, may be configured to update the route based on the one or more tiles containing traffic information for one or more links.

### Example Use Cases

### Example 1: Initial Route Determination

In an example embodiment, the apparatus 10, such as the processing circuitry 12, *e.g.,* the processor 14, may be configured to determine the initial route based on the location of the vehicle and the destination. In such an example, the route may be initially determined using only tile(s) containing traffic information, if at all, in the vicinity of the vehicle location such that the route is not optimized based on a more fulsome review of the traffic information. In some embodiments, the initial route may be displayed by a user interface 22, and the apparatus 10, such as the processing circuitry 12, may also request traffic information for links of road included in the route. Based on the reception of one or more tiles that include the links of road included in the route, the apparatus 10, such as the processing circuitry 12, *e.g.,* the processor 14, may be configured to determine the traffic information based on one or more tiles received by the apparatus 10, such as based on traffic information for the links of the road included in the route and, in some embodiments, also based on traffic information for other links included in the one or more tiles, such as other links along the route tree. Based on the traffic information, the apparatus 10, such as the processing circuitry 12, *e.g.,* the processor 14, may be configured to update the route based on at least one of the one or more tiles containing traffic information. In such an example, the apparatus 10, such as the processing circuitry 12, *e.g.,* the processor 14, may be configured to determine whether the one or more tiles containing traffic information includes all of the links on the updated route, at which point either a further tile request may be transmitted if there are missing links (*e.g.,* links that are not included in any tiles that contain traffic information along the route) or the route (*e.g.,* ETA) may be updated as provided to the user interface 22. In some embodiments, the apparatus 10, such as the processing circuitry 12, may repeat this process of updating the route one or more times to optimize the route, such as while the route continues to improve in at least one measure, e.g., time or distance.

### Example 2: Alternative Route Screen

In an example embodiment, the apparatus 10, such as the processing circuitry 12 may receive a user input, such as through the user interface 22, requesting an alternative route. In various embodiments, the apparatus 10, such as the processing circuitry 12, may be configured to determine one or more alternative routes based on the location and destination (*e.g.,* the alternative route determined may initially not be optimized for traffic). In some embodiments, the apparatus 10, such as by the processing circuitry 12, *e.g.,* the processor 14, may be configured to select one or more of the alternative routes to update based on traffic information derived from one or more tiles containing traffic information along the route tree. For example, the apparatus 10, such as the processing circuitry 12, may be configured to select the alternative routes that are the shortest in distance to update using traffic information. In some embodiments, the user input may indicate the type of alternative route desired (*e.g.,* user input may indicate a desired alternative route as short in distance as possible regardless of time). In some embodiments, the apparatus 10, such as the processing circuitry 12, *e.g.,* the processor 14, may be configured to update the alternative routes in the same way that the routes are updated by the apparatus as described above in conjunction with Figure 2 (*e.g.,* tile(s) requested for the links along the alternative route that do not have tiles containing traffic information). In some embodiments, one or more of the alternative routes may be displayed by the processing circuitry 12 to the user interface 22. For example, the user interface 22 may display one or more alternative routes sorted by time to destination. Alternatively, the apparatus 10, such as the processing circuitry 12, *e.g.,* the processor 14, may be configured to update the route based on the alternative route determination. For example, the apparatus 10, such as the processing circuitry 12, *e.g.,* the processor 14, may be configured to update the route without further user input if the alternative route meets a criteria (*e.g.,* faster than current route, shorter than current route, avoids highways, etc.). In some embodiments, a confirmation or request for approval may be provided to the user interface 22.

### Example 3: Dynamic Route Guidance

In some embodiments, the apparatus 10, such as the processing circuitry 12, *e.g.,* the processor 14, may be configured to dynamically update the route throughout a given use of the apparatus. For example, the apparatus 10, such as the processing circuitry 12, may continuously, or upon a consistent interval, perform operations herein to determine whether the route is still optimized for traffic. In some embodiments, the apparatus 10, such as the processing circuitry 12, *e.g.,* the processor 14, may be configured to perform the operations discussed in the alternative route guidance internally without a user input. In some embodiments, the apparatus 10, such as the processing circuitry 12, may be configured to automatically update the route based on various factors, such as an interval of time, an unexpected delay time for route, tile(s) received containing traffic information for surrounding links of roadway, and/or the like. For example, the apparatus 10, such as the processing circuitry 12, *e.g.,* the processor 14, may be configured to determine an update to be made, or at least determine whether an update is needed, when an ETA for the route has been delayed more than a predefined amount of time (*e.g.,* delay time trigger may be dependent on total trip time remaining). In some embodiments, the apparatus 10, such as the processing circuitry 12, may be configure to provide the updated route to the user interface 22 for approval and/or notification. For example, the user interface 22 may display a notification that the route has changed and include the updated ETA.

### Additional Examples

In some embodiments, the apparatus 10, such as the processing circuitry 12, *e.g.,* the processor 14, may be configured to account for specific criteria (*e.g.,* setting inputs received from a user interface 22) during operations. For example, the user input may indicate that the route should avoid specific areas or road types (*e.g.,* highways, tolls). Additionally, in some embodiments the user input may indicate a level of importance for speed to destination (*e.g.,* the apparatus 10 may allow for rubber band routing such that the time to destination is unimportant, only that the roads are not blocked) In some embodiments, the user input may indicate a route updating time (*e.g.,* the apparatus 10 may be updated on a time interval, continuously, or based on an event).

In some embodiments, the apparatus 10 may be used in the operation of autonomous and/or semi-autonomous vehicles. In such an embodiment, the route may be provided to the guidance system associated with or in communication with the autonomous vehicle. In some embodiments, the apparatus 10 may be integrated into the autonomous vehicle electronics.

In some embodiments, the apparatus 10, such as the processing circuitry 12, *e.g.,* the processor 14, may be configured to determine routes that include one or more stops before the destination is reached. In an example embodiment, the apparatus 10, such as the processing circuitry 12, *e.g.,* the processor 14, may be configured to determine the route for each segment of the route. For example, a segment may be one point (*e.g.,* location of the vehicle, an intermediate stopping location, a destination location) to the next point. In some embodiments, the route segments may be compared, such that the apparatus 10, such as the processing circuitry 12, combines the segments in different order to optimize time and/or distance. For example, a route with two stops may be optimized by the apparatus 10 such as by comparing the travel time when one stop is first and then the travel time when the other stop is first and determining the route based on the faster total travel time. In some embodiments, the order of stops may be important, such that the apparatus 10 may optimize each individual segment in order to optimize total travel time.

As described above, Figure 2 illustrates a flowchart of an apparatus 10, method, and computer program product according to example embodiments of the invention. It will be understood that each block of the flowchart, and combinations of blocks in the flowchart, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by the memory device 16 of an apparatus employing an embodiment of the present disclosure and executed by the processing circuitry 12, the processor 14 or the like of the apparatus. As will be appreciated, any such computer program instructions may be loaded onto a computer or other programmable apparatus (*e.g.,* hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included, such as those depicted with a dashed outline in Figure 2. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method of determining route guidance in a manner dependent upon traffic, the method comprising:
determining a route for a vehicle based on a location of the vehicle and a destination of the vehicle;
causing transmission of a request for one or more tiles containing traffic information along a route tree, wherein the route tree includes a collection of links considered during determination of the route;
receiving one or more tiles that contain traffic information along the route tree; and
updating the route for the vehicle based on at least one of the one or more tiles.

2. The method of claim 1 further comprising:
determining whether the traffic information provided by the one or more tiles covers the entire route tree;
in an instance in which the traffic information provided by the one or more tiles fails to cover the entire route tree, causing a request for one or more additional tiles containing traffic information to be transmitted;
receiving one or more additional tiles that contain traffic information along the route tree; and
updating the route based on the one or more additional tiles.

3. The method of claim 1 further comprising:
receiving an input indicating one or more additional routes to be displayed; and
updating the route based on one of the one or more additional routes.

4. The method of claim 1 further comprising causing a display of the route.

5. The method of claim 1 further comprising:
determining the one or more tiles fails to include traffic information for one or more links of the route tree; and
requesting one or more additional tiles containing the traffic information for the one or more links of the route tree that fails to include traffic information.

6. The method of claim 5 further comprising:
receiving one or more additional tiles containing the traffic information of the one or more links of the route tree that fails to include traffic information; and
updating the route based on at least one of the one or more additional tiles.

7. The method of claim 1, wherein the one or more tiles includes at least one of a tile identification number, a date of capture, a time of capture, a road specifications, or traffic information associated with each tile.

8. An apparatus for determining route guidance with traffic, the apparatus comprising at least one processor and at least one non-transitory memory including computer program code instructions, the computer program code instructions configured to, when executed, cause the apparatus to:
determine a route for a vehicle based on a location of the vehicle and a destination of the vehicle;
cause transmission of a request for one or more tiles containing traffic information along a route tree, wherein the route tree includes a collection of links considered during determination of the route;
receive one or more tiles that contain traffic information along the route tree; and
update the route for the vehicle based on at least one of the one or more tiles.

9. The apparatus according to Claim 8, wherein the at least one memory and computer program code are configured to, with the processor, cause the apparatus to:
determine whether the traffic information provided by the one or more tiles covers the entire route tree;
in an instance in which the traffic information provided by the one or more tiles fails to cover the entire route tree, cause a request for one or more additional tiles containing traffic information to be transmitted;
receive one or more additional tiles that contain traffic information along the route tree; and
update the route based on at least one of the one or more additional tiles.

10. The apparatus according to Claim 8, wherein the at least one memory and computer program code are configured to, with the processor, cause the apparatus to:
receive an input indicating one or more additional routes to be displayed; and
update the route based on one of the one or more additional routes.

11. The apparatus according to Claim 8, wherein the at least one memory and computer program code are configured to, with the processor, cause the apparatus to cause a display of the route.

12. The apparatus according to Claim 8, wherein the at least one memory and computer program code are configured to, with the processor, cause the apparatus to:
determine the one or more tiles fails to include traffic information for one or more links of the route tree; and
request one or more additional tiles containing the traffic information for the one or more links of the route tree that fails to include traffic information.

13. The apparatus according to Claim 12, wherein the at least one memory and computer program code are configured to, with the processor, cause the apparatus to:
receive one or more additional tiles containing traffic information of the one or more links of the route tree that fails to include traffic information; and
update the route based on at least one of the one or more additional tiles.

14. The apparatus according to Claim 8, wherein the one or more tiles includes at least one of a tile identification number, a date of capture, a time of capture, a road specifications, or traffic information associated with each tile.

15. A computer program product for determining route guidance with traffic, the computer program product comprising at least one non-transitory computer-readable storage medium having computer-executable program code portions stored therein, the computer-executable program code portions comprising program code instructions configured to:
determine a route for a vehicle based on a location of the vehicle and a destination of the vehicle;
cause transmission of a request for one or more tiles containing traffic information along a route tree, wherein the route tree includes a collection of links considered during the determination of the route;
receive one or more tiles that contain traffic information along on the route tree; and
update the route for the vehicle based on at least one of the one or more tiles.
